# FASCICULE DE BREVET EUROPEEN

(11) **EP 0 619 269 B1**
(45) Date de publication et mention de la délivrance du brevet: **14.01.1998**
(21) Numéro de dépôt: 94400569.3
(22) Date de dépôt: 16.03.1994
(51) Int. Cl.: C01B 21/082, C04B 35/58

(54) **Procédé de préparation de poudre pour céramique en oxynitrure d'aluminium gamma optiquement transparente**
Verfahren zur Herstellung von Pulver für optisch transparente Keramik aus Gamma-Aluminiumoxynitrid
Process for the preparation of powder for optically transparent ceramic made of gamma-aluminium oxynitride

(30) Priorité: 30.03.1993 FR 9303718
(43) Date de publication de la demande: 12.10.1994
(73) Titulaire: ELF ATOCHEM S.A., 92800 Puteaux (FR)
(72) Inventeur: Bachelard, Roland, F-69007 Lyon (FR); Disson, Jean-Pierre, F-69008 Lyon (FR); Morlhon, Bruno, F-69100 Villeurbanne (FR)

(56) Documents cités:
- EP-A- 0 313 443
- FR-A- 2 512 003
- FR-A- 2 512 012
- FR-A- 2 556 711
- FR-A- 2 643 069

## Description

La présente invention a pour objet un procédé de préparation de poudre pour céramique en oxynitrure d'aluminium gamma optiquement transparente.

On connaît plusieurs procédés de préparation de poudre d'oxynitrure d'aluminium gamma pour la préparation de céramique.

ISHE-SHALOM [Final Technical Report, Contract No. DAJA 48-84-009, 1986, European Research Office of the U.S. Army, London] et RAFANIELLO et CUTLER [Am. Cer. Soc., 64, C-128, 1981] décrivent un procédé par carbonitruration d'alumine. Ce procédé consiste à opérer en présence d'un excès contrôlé d'alumine afin d'obtenir un mélange comprenant de l'alumine et du nitrure d'aluminium, lequel mélange est ensuite transformé en poudre d'oxynitrure d'aluminium gamma. La poudre ainsi obtenue contient du carbone résiduaire qui lui confère une couleur grisâtre incompatible avec la production d'une céramique présentant une bonne transparence optique.

Dans US 4,686,070 on décrit un procédé par carbonitruration d'alumine gamma très pure conduisant à un mélange d'alumine alpha et de nitrure d'aluminium. Après chauffage, on obtient une poudre agglomérée d'oxynitrure d'aluminium gamma. Un temps de broyage de 16 heures et une étape de tamisage sont nécessaires pour que la poudre d'oxynitrure d'aluminium gamma obtenue soit constituée de particules de diamètre inférieur à 37 µm.

Dans FR 2 556 711 on réalise un mélange intime de poudre très fine d'alumine alpha de très haute pureté et de poudre de nitrure d'aluminium dont les particules ont une taille inférieure à 20 µm. Après chauffage, on obtient une poudre d'oxynitrure d'aluminium gamma sous forme d'agglomérats. La taille des particules de la poudre après broyage est inférieure à 20 µm et le diamètre médian est égal à 6 µm.

Dans US 4,720,362 on décrit un procédé mettant en oeuvre un mélange renfermant de 30 à 37% en mole de nitrure d'aluminium et de 63 à 70% en mole d'alumine alpha, tous deux de haute pureté. Après chauffage, ce mélange se présente sous la forme d'une poudre agglomérée d'oxynitrure d'aluminium gamma nécessitant 72 heures de broyage pour que les particules possèdent un diamètre médian égal à 1 µm.

On sait que les propriétés de transparence optique des céramiques à base d'oxynitrure d'aluminium gamma dépendent de l'aptitude au frittage de la poudre utilisée. BILLY [Revue de Chimie Minérale, t 22, 1985, p. 473-483] a montré que la cinétique de frittage de la poudre d'oxynitrure d'aluminium gamma varie comme 1/r², r représentant le rayon des particules constituant la poudre.

Il apparaît donc avantageux d'utiliser une poudre fine d'oxynitrure d'aluminium gamma pour préparer une céramique optiquement transparente.

Avec les différents procédés cités, on obtient une telle poudre fine par broyage de la poudre agglomérée d'oxynitrure d'aluminium gamma. Cette poudre étant très fortement agglomérée, le temps de broyage est long, de l'ordre de la dizaine d'heures voire plusieurs dizaines d'heures.

Un temps de broyage long présente deux inconvénients majeurs. D'une part, il est consommateur d'énergie donc coûteux et, d'autre part, il introduit une pollution de la poudre par les matériaux de constitution du broyeur ce qui diminue les qualités optiques de la céramique produite.

L'invention propose un nouveau procédé de préparation de poudre d'oxynitrure d'aluminium gamma permettant de contrôler son état d'agglomération et donc d'en faciliter le broyage.

L'invention concerne donc en premier lieu un procédé de préparation de poudre d'oxynitrure d'aluminium gamma caractérisé en ce qu'il consiste à faire réagir le nitrure d'aluminium avec l'alumine alpha et avec une alumine de grande surface spécifique ou un précurseur générant une alumine de grande surface spécifique.

Par alumine de grande surface spécifique, on entend ici toute alumine présentant une surface spécifique supérieure à 10 m²/g.

Plus précisément, le procédé selon l'invention est caractérisé en ce que le nitrure d'aluminium, l'alumine alpha et l'alumine de grande surface spécifique ou le précurseur d'une telle alumine sont mélangés, séchés, chauffés à une température suffisante pour former une poudre d'oxynitrure d'aluminium gamma, laquelle poudre est ensuite broyée.

Le nitrure d'aluminium du procédé selon l'invention est avantageusement choisi parmi les nitrures d'aluminium de haute pureté dont les particules présentent un diamètre moyen inférieur à 10 µm et de préférence à 5 µm. Préférentiellement, on utilise un nitrure d'aluminium dont la teneur en oxygène est inférieure à 3% en poids et la concentration en impuretés métalliques ne dépasse pas 5000 ppm.

L'alumine alpha est choisie parmi les alumines alpha présentant une pureté au moins égale à 99,5% en poids.

L'alumine de grande surface spécifique ou le précurseur générant une telle alumine est choisi parmi les alumines amorphe ou de transition présentant un degré de pureté du même ordre que celui de l'alumine alpha. Par précurseur générant une alumine de grande surface spécifique, on entend ici les hydroxydes d'aluminium et les sels d'aluminium susceptibles de conduire à une alumine de grande surface spécifique dans les conditions de température du procédé selon l'invention. A titre d'exemples de sels d'aluminium, on peut citer le nitrate, le sulfate, l'hydroxycarbonate, les alcoolates, le formiate et l'oxalate. Préférentiellement, on utilise l'alumine gamma.

L'alumine alpha et l'alumine de grande surface spécifique ou le précurseur d'une telle alumine sont généralement choisies de telle sorte que leur mélange présente une surface spécifique comprise entre 6 et 350 m²/g et de préférence entre 10 et 260 m²/g et une masse volumique apparente inférieure à 1 kg/dm³ et de préférence à 0,6 kg/dm³.

On utilise généralement une quantité d'alumine alpha comprise entre 5 et 95% et de préférence entre 25 et 85% en poids du mélange constitué par l'alumine alpha et l'alumine de grande surface spécifique ou le précurseur d'une telle alumine, ledit précurseur étant compté en équivalent alumine.

On peut avantageusement remplacer le mélange constitué par l'alumine alpha et l'alumine de grande surface spécifique ou le précurseur d'une telle alumine par une alumine de transition dont la métamorphose non homogène conduit à un mélange d'alumine alpha et d'alumine de grande surface spécifique. A titre d'exemple, on peut citer l'alumine ex-alun partiellement calcinée.

Le mélange comprenant le nitrure d'aluminium, l'alumine alpha et l'alumine de grande surface spécifique ou le précurseur d'une telle alumine est caractérisé en ce qu'il comprend
- de 16 à 40% en mole de nitrure d'aluminium et de préférence de 25 à 35 %
- et de 60 à 84% et de préférence de 65 à 75% en mole du mélange constitué par l'alumine alpha et l'alumine de grande surface spécifique ou le précurseur d'une telle alumine.

Le mélange précité peut être effectué dans tout type d'appareillage et pendant un temps suffisant pour obtenir un mélange homogène. A titre d'exemple, pour un mélangeur à billes, ce temps peut varier de 20 minutes à 20 heures.

Ledit mélange peut être réalisé à sec ou en présence de solvant organique exempt de traces d'eau. A titre d'exemple, on peut citer l'isopropanol et le toluène.

Le séchage dudit mélange est généralement effectué sous atmosphère gazeuse sèche. On peut pour cela utiliser tout type de gaz ou de mélange de gaz sec et inerte vis à vis des différents constituants dudit mélange. A titre d'exemple, on peut citer l'azote, l'argon, I'hélium, le xénon et l'air. Préférentiellement, on utilise l'air.

On peut également effectuer le séchage sous pression réduite.

Le séchage est généralement effectué à une température ne dépassant pas 700°C et pendant un temps suffisant pour que le poids du mélange soit constant.

Le séchage peut être effectué avant l'introduction dans le réacteur servant ultérieurement à la transformation dudit mélange en poudre d'oxynitrure d'aluminium gamma. Préférentiellement, on réalise le séchage au sein du réacteur.

La réaction de transformation dudit mélange en poudre d'oxynitrure d'aluminium gamma est effectuée dans un réacteur maintenu sous courant de gaz sec. Ce gaz est généralement choisi parmi l'azote et les mélanges de gaz renfermant de l'azote qui ne contiennent pas d'atome d'oxygène. Préférentiellement, on utilise l'azote ou un mélange de gaz en renfermant de manière à ce que la pression partielle en azote soit au moins égale à 0,1 atm (10⁴ Pa).

Le réacteur est généralement constitué par un matériau inerte au regard du gaz sec, du nitrure d'aluminium et de l'alumine. A titre d'exemple, on peut citer le nitrure de bore ou d'aluminium sous forme massive ou de revêtement sur le graphite, l'alumine frittée et le carbure de silicium.

Le chauffage du réacteur est généralement effectué de façon progressive jusqu'à une température maximale comprise entre 1650 et 1900°C et de préférence entre 1700 et 1800°C. Cette température est maintenue pendant un temps suffisant pour permettre la formation de poudre d'oxynitrure d'aluminium gamma. A titre d'exemple, ce temps peut varier de quelques heures à quelques dizaines d'heures.

Le débit de gaz sec utilisé varie en fonction de la pression partielle des gaz renfermant de l'oxygène qui peuvent éventuellement se former au cours de la réaction. En général, on utilise un débit de gaz inférieur à 10 KPa et de préférence à 5 KPa.

Le broyage de la poudre agglomérée d'oxynitrure d'aluminium gamma ainsi obtenue peut être effectué dans tout type d'appareillage adapté au broyage de poudres. Généralement, on utilise un broyeur constitué d'une jarre revêtue intérieurement de polymère ou d'élastomère contenant des boulets en oxynitrure d'aluminium gamma ou en alumine frittée de pureté suffisante pour ne pas polluer la poudre ainsi obtenue. A titre d'exemple de polymère ou d'élastomère, on peut citer le polyuréthanne et le polybutadiène.

Le broyage peut être réalisé à sec ou par voie humide, par exemple en présence d'eau. On utilise de préférence le broyage à sec.

Le temps de broyage utilisé est suffisant pour obtenir une poudre broyée d'oxynitrure d'aluminium gamma. Par poudre broyée, on entend ici une poudre dont la taille des particules est inférieure à 10 µm.

La poudre agglomérée d'oxynitrure d'aluminium gamma obtenue par le procédé selon l'invention est caractérisée en ce que la porosité de l'agglomérat est supérieure à 75%.

Cette poudre agglomérée est également caractérisée en ce qu'elle présente une teneur en carbone inférieure à 300 ppm et qu'elle renferme moins de 2% en poids de nitrure d'aluminium et moins de 2% en poids d'alumine.

La poudre broyée d'oxynitrure d'aluminium gamma obtenue par le procédé selon l'invention est caractérisée en ce que 100% des particules présentent une taille inférieure à 10 µm et qu'elle présente une transmittance d'au moins 8% mesurée à 2500 cm⁻¹ sur une pastille de KBr de 0,9 mm d'épaisseur contenant 3,33% d'oxynitrure d'aluminium gamma.

Cette poudre broyée est également caractérisée en ce qu'elle présente une teneur en carbone inférieure à 300 ppm et qu'elle renferme moins de 2% en poids de nitrure d'aluminium et moins de 2% en poids d'alumine.

La poudre d'oxynitrure d'aluminium gamma est particulièrement recommandée pour produire des articles en céramique polycristalline transparente dans le proche ultraviolet, le visible et l'infrarouge. De telles céramiques sont avantageusement utilisées dans les domaines de l'aéronautique militaire et de l'éclairage. A titre d'exemples, on peut citer les fenêtres de visée pour missiles et les enveloppes transparentes pour les lampes à vapeur.

### EXEMPLE 1

On réalise un mélange comprenant 73% en mole de poudre d'alumine et 27% en mole de nitrure d'aluminium. L'alumine utilisée renferme 75% en poids d'alumine alpha et 25% en poids d'alumine gamma, présente une pureté au moins égale à 99,98%, une surface spécifique de 25 m²/g, une masse volumique apparente de 0,3 kg/dm³ et les particules présentent un diamètre médian égal à 0,45 µm (mesuré par granulométrie Sédigraph). Cette alumine est commercialisée par la société Baïkowski sous la marque Baïkalox® CR30. Le nitrure d'aluminium possède une surface spécifique de 3,5 m²/g, une teneur en oxygène égale à 1% et les particules présentent un diamètre médian d'environ 2 µm. Ce nitrure d'aluminium est commercialisé par la société Elf Atochem sous la marque Pyrofine® A4.

Le mélange des poudres d'alumine et de nitrure d'aluminium est réalisé à sec dans une jarre remplie à 40% environ de billes d'alumine pendant 17 heures sur des rouleaux tourne-jarre. Le mélange homogène ainsi obtenu est placé dans un creuset en alumine ou en nitrure de bore, puis séché à 400°C pendant 2 heures sous air sec. La perte de poids observée est égale à 0,75%.

On introduit le creuset dans un four de 220 l de volume utile muni d'un couvercle et de résistances en graphite. L'air présent dans le four est éliminé sous vide à environ 0,1 KPa, puis on introduit de l'azote avec un débit de 1 m³/h. La température du four est portée à 1750°C en 2 heures puis maintenue pendant 17 heures. La teneur en CO de la phase gazeuse est mesurée grâce à un analyseur infrarouge URAS 7N placé à la sortie du four. Cette teneur en CO ne dépasse pas 1,7%.

On laisse le four refroidir naturellement jusqu'à la température ambiante. La perte en poids de la charge est en moyenne égale à 0,4%. Le produit obtenu est une poudre agglomérée d'oxynitrure d'aluminium gamma de couleur blanche, ceci que le creuset soit en alumine ou nitrure de bore.

L'analyse par diffraction des rayons X de la poudre obtenue ne permet pas de déceler de nitrure d'aluminium résiduaire et indique une teneur en alumine inférieure à 1%. L'utilisation des abaques proposés par LEJUS [Bull. Soc. Chim. France, 11-12, p. 2123, 1962] permet de déterminer une teneur en alumine équivalente à 73,9% en mole. La teneur en carbone mesurée par combustion à haute température est inférieure à la limite de détection égale à 50 ppm.

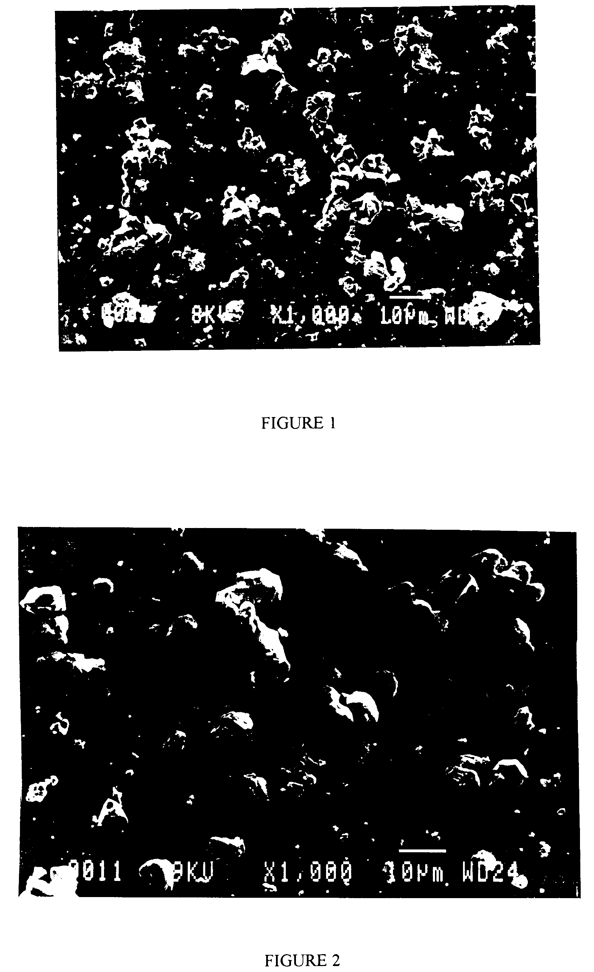

La poudre d'oxynitrure d'aluminium gamma obtenue est présentée dans la figure 1. Elle comporte des cristaux anguleux de taille généralement inférieure à 10 µm.

La porosité du bloc aggloméré est déduite de la mesure de la masse volumique apparente. On trouve que cette porosité est égale à 83%.

A l'aide d'un broyeur à disque oscillant, on effectue un test de broyage pendant 30 secondes. On trouve que 76% de la poudre agglomérée a été broyée et que le diamètre médian de la fraction broyée est égal à 3,2 µm (granulométrie Sédigraph).

On mesure la transmittance dans l'infrarouge de la poudre broyée en réalisant une pastille de KBr de 0,9 mm d'épaisseur renfermant 3,33% en poids de poudre broyée d'oxynitrure d'aluminium gamma. La transmittance mesurée à 2500 cm⁻¹ est égale à 20,3%, l'écart-type étant égal à 1,3.

Les résultats expérimentaux sont rassemblés dans le tableau 1.

### EXEMPLE 2 (comparatif)

On procède dans les conditions de l'exemple 1 en présence d'une alumine renfermant moins de 5% en poids d'alumine alpha et plus de 95% en poids d'alumine gamma et qui présente une surface spécifique de 105 m²/g, une masse volumique apparente de 0,15 kg/dm³ et un diamètre médian des particules égal à 0,4 µm. Cette alumine est commercialisée sous la marque Baïkalox ® CR125.

La température de réaction est égale à 1800°C. Le produit obtenu se présente sous la forme d'un bloc de poudre d'oxynitrure d'aluminium gamma faiblement aggloméré dont la porosité est égale à 75%. Ce bloc se désagglomère facilement pour donner une poudre constituée de grains massifs de taille élevée, généralement comprise entre 6 et 15 µm (voir figure 2). Ces grains massifs sont très difficiles à broyer.

Les résultats expérimentaux sont rassemblés dans le tableau I.

### EXEMPLE 3 (comparatif)

On procède dans les conditions de l'exemple 1 en présence d'une alumine renfermant 95% en poids d'alumine alpha et 5% en poids d'alumine gamma et qui présente une surface spécifique de 6 m²/g, une masse volumique apparente de 0,55 kg/dm³ et un diamètre médian des particules égal à 0,6 µm.. Cette alumine est commercialisée sous la marque Baïkalox ® CR6.

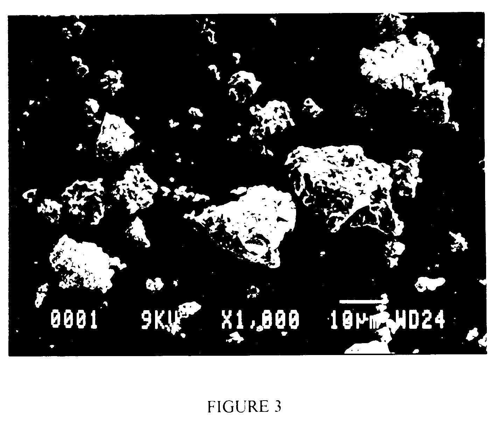

La température de réaction est égale à 1700°C. La poudre d'oxynitrure d'aluminium gamma récupérée (voir figure 3) se présente sous la forme d'agglomérats très difficiles à broyer dont la porosité est égale à 54%.

Les résultats expérimentaux sont rassemblés dans le tableau 1.

**TABLEAU 1**

| **EXEMPLE** | **1** | **2** | **3** |
|---|---|---|---|
| **Perte en poids au séchage (%)** | 0,75 | 3,5 | 0,3 |
| **Perte en poids après chauffage (%)** | 0,4 | 3,8 | 0,2 |

| **Poudre agglomérée (avant broyage)** | | | |
|---|---|---|---|
| Couleur | blanc | blanc | blanc |
| Teneur en carbone (ppm) | <50 | <50 | <50 |
| Alumine résiduaire (%) | < 1 | n.d. | < 1 |
| Nitrure d'aluminium résiduaire (%) | n.d. | < 1 | n.d. |
| Teneur équivalente en alumine (mole %) | 73,9 | 73,0 | 72,9 |
| Porosité | 83 | 75 | 54 |

| **Poudre (après test de broyage)** | | | |
|---|---|---|---|
| Fraction broyée (%) | 76 | 100 | 53 |
| d75 (µm)* | 6,8 | 12 | 15 |
| Diamètre médian | | | |
| de la fraction broyée (µm) | 3,2 | 8,6 | 2,5 |
| n. d. : non décelé | | | |

| | | | |
|---|---|---|---|
| * 75% des particules présentent une taille inférieure à la valeur indiquée dans le tableau | | | |

## Revendications

1. Procédé de préparation de poudre d'oxynitrure d'aluminium gamma pour céramique optiquement transparente qui consiste à :
a) mélanger le nitrure d'aluminium avec l'alumine alpha et avec une alumine ayant une surface spécifique supérieure à 10 m²/g ou un précurseur d'une telle alumine ; la teneur en alumine alpha étant comprise entre 5 et 95 % en poids de l'ensemble constitué par l'alumine alpha et l'alumine ou le précurseur,
b) sécher ledit mélange,
c) chauffer ledit mélange à une température suffisante pour obtenir une poudre d'oxynitrure d'aluminium gamma,
d) broyer la poudre ainsi obtenue.

2. Procédé selon la revendication 1 caractérisé en ce que le mélange constitué par le nitrure d'aluminium, l'alumine alpha et l'alumine ou le précurseur contient :
- 16 à 40 % en mole de nitrure d'aluminium
- et 60 à 84 % en mole de l'ensemble constitué par l'alumine alpha et l'alumine ou le précurseur.

3. Procédé selon l'une des revendications 1 ou 2 caractérisé en ce que le nitrure d'aluminium est choisi parmi les nitrures d'aluminium de haute pureté dont les particules présentent un diamètre moyen inférieur à 10 µm.

4. Procédé selon l'une des revendications 1 à 3 caractérisé en ce que le nitrure d'aluminium présente une teneur en oxygène inférieure à 3 % en poids et une concentration en impuretés métalliques ne dépassant pas 5000 ppm.

5. Procédé selon l'une des revendications 1 à 4 caractérisé en ce que l'alumine alpha et l'alumine ou le précurseur sont choisis de telle sorte que le mélange présente une surface spécifique comprise entre 6 et 350 m²/g et une masse volumique apparente inférieure à 1 kg/dm³.

6. Procédé selon la revendication 1 caractérisé en ce que le séchage est réalisé à l'aide d'un gaz ou d'un mélange de gaz sec choisi parmi l'azote, l'argon, l'hélium, le xénon et l'air et à une température inférieure à 700°C.

7. Procédé selon la revendication 1 caractérisé en ce que la température de réaction est comprise entre 1650 et 1900°C.

8. Procédé selon la revendication 1 caractérisé en ce que l'on chauffe en présence d'un gaz sec choisi parmi l'azote ou les mélanges de gaz renfermant de l'azote qui ne contiennent pas d'atome d'oxygène.

## Claims

1. Process for the preparation of gamma aluminium oxynitride powder for optically transparent ceramics, which consists in:
a) mixing aluminium nitride with alpha alumina and with an alumina which has a specific surface higher than 10 m²/g or a precursor of such an alumina; the content of alpha alumina being between 5 and 95 % by weight of the whole consisting of alpha alumina and the alumina or the precursor,
b) drying the said mixture,
c) heating the said mixture to a sufficient temperature to obtain a gamma aluminium oxynitride powder,
d) grinding the powder thus obtained.

2. Process according to Claim 1, characterized in that the mixture consisting of aluminium nitride, alpha alumina and the alumina or the precursor contains:
- 16 to 40 mol% of aluminium nitride,
- and 60 to 84 mol% of the whole consisting of alpha alumina and the alumina or the precursor.

3. Process according to either of Claims 1 and 2, characterized in that the aluminium nitride is chosen from aluminium nitrides of high purity in which the particles have a mean diameter smaller than 10 µm.

4. Process according to one of Claims 1 to 3, characterized in that the aluminium nitride has an oxygen content lower than 3 % by weight and a concentration of metallic impurities not exceeding 5000 ppm.

5. Process according to one of Claims 1 to 4, characterized in that the alpha alumina and the alumina or the precursor are chosen so that the mixture has a specific surface of between 6 and 350 m²/g and an apparent density lower than 1 kg/dm³.

6. Process according to Claim 1, characterized in that the drying is carried out with the aid of a dry gas or gas mixture chosen from nitrogen, argon, helium, xenon and air and at a temperature lower than 700°C.

7. Process according to Claim 1, characterized in that the reaction temperature is between 1650 and 1900°C.

8. Process according to Claim 1, characterized in that heating is carried out in the presence of a dry gas chosen from nitrogen or the gas mixtures containing nitrogen which do not contain any oxygen atom.

## Patentansprüche

1. Verfahren zur Herstellung eines γ-Aluminiumoxynitridpulvers für eine optisch transparente Keramik, bei dem:
a) man das Aluminiumnitrid mit α-Aluminiumoxid und mit einem Aluminiumoxid einer spezifischen Oberfläche oberhalb von 10 m²/g oder einem Vorläufer eines solchen Aluminiumoxids vermischt, wobei der α-Aluminiumoxidgehalt zwischen 5 und 95 Gew.-% der gesamten Mischung, die aus α-Aluminiumoxid und Aluminiumoxid oder seinem Vorläufer besteht, beträgt;
b) man diese Mischung trocknet;
c) man diese Mischung bei einer Temperatur erwärmt, die ausreicht, um ein γ-Aluminiumoxynitridpulver zu erhalten;
d) man das so erhaltene Pulver zerkleinert.

2. Verfahren nach Anspruch 1, dadurch gekennzeichnet, daß die Mischung, die aus Aluminiumnitrid, α-Aluminiumoxid und Aluminiumoxid oder seinem Vorläufer besteht,
- 16 bis 40 Mol.-% Aluminiumnitrid und
- 60 bis 84 Mol.-% der gesamten Mischung enthält, die aus α-Aluminiumoxid und dem Aluminiumoxid oder seinem Vorläufer besteht.

3. Verfahren nach Anspruch 1 oder 2, dadurch gekennzeichnet, daß das Aluminiumnitrid ausgewählt ist aus Aluminiumnitriden hoher Reinheit, deren Teilchen einen mittleren Durchmesser von weniger als 10 µm aufweisen.

4. Verfahren nach einem der Ansprüche 1 bis 3, dadurch gekennzeichnet, daß das Aluminiumnitrid einen Sauerstoffgehalt von weniger als 3 Gew.-% und eine Konzentration an metallischen Verunreinigungen aufweist, die 5.000 ppm nicht übersteigt.

5. Verfahren nach einen, der Ansprüche 1 bis 4, dadurch gekennzeichnet, daß das α-Aluminiumoxid und das Aluminiumoxid oder sein Vorläufer derart ausgewählt sind, daß die Mischung eine spezifische Oberfläche zwischen 6 und 350 m²/g und eine Schüttdichte unterhalb von 1 kg/dm³ aufweist.

6. Verfahren nach Anspruch 1, dadurch gekennzeichnet, daß die Trocknung mit Hilfe eines Gases oder einer Mischung trockener Gase, die ausgewählt sind aus Stickstoff, Argon, Helium, Xenon und Luft, bei einer Temperatur unterhalb von 700 °C durchgeführt wird.

7. Verfahren nach Anspruch 1, dadurch gekennzeichnet, daß die Temperatur der Reaktion zwischen 1.650 und 1.900 °C liegt.

8. Verfahren nach Anspruch 1, dadurch gekennzeichnet, daß man das Aufheizen in Gegenwart eines trockenen Gases durchführt, das ausgewählt ist aus Stickstoff oder Mischungen von Gasen einschließlich Stickstoff, die kein Sauerstoffatom enthalten.
